# EUROPEAN PATENT SPECIFICATION

(11) **EP 2 623 870 B1**
(45) Date of publication and mention of the grant of the patent: **19.12.2018**
(21) Application number: 13425022.4
(22) Date of filing: 04.02.2013
(51) Int. Cl.: F24D 19/06, F24D 19/00, F28D 1/02, F28D 1/03, F28D 21/00

(54) **Radiator with vertical heating elements**
Heizkörper mit senkrechten Heizelementen
radiateur avec éléments chauffants verticaux

(30) Priority: 06.02.2012 IT RM20120040
(43) Date of publication of application: 07.08.2013
(73) Proprietor: Cordivari S.r.L., 64020 Morro d'Oro (TE) (IT)
(72) Inventor: Cordivari, Ercole, 64020 Morro d'Oro (TE) (IT)
(74) Representative: Santi, Filippo

(56) References cited:
- WO-A1-00/31474
- DE-U1-202010 002 770
- GB-A- 1 426 716
- GB-A- 1 518 081

## Description

The present invention relates to a radiator with vertical heating elements, preferably operating with a low temperature heat carrier fluid, permitting heating in an easy, quick, reliable, ecologic and economic way within a closed room, thus obtaining a remarkable energetic saving.

Furthermore, radiator according to the invention optionally permits cooling, i.e. acclimatising, a closed room, thus obtaining the same simplicity, speed, reliability, environmental impact reduction, low costs and energetic saving results.

In the following of the present specification and in the claims, "radiator" is intended to mean a heating body, usually comprising one or more radiating elements, emitting heat by natural convection and irradiation. "electric fan" is instead intended to mean a terminal of a system mainly exchanging by forced induced convection by an electro-fan conveying an air flow on a finned tube assembly within which heat carrier fluid flows; summer use is permitted by a suitable system for collection of condensate due to the fact that heat carrier fluid flows within finned tube assembly has a temperature lower than the room temperature, by which dew conditions can be reached.

It is known that in recent years an always more felt environmental comfort needing exist both in residential a hosting structures. Said needing, along with the needing of avoiding not aesthetic and too bulky solutions, has been addressed to systems providing water (refrigerated in summer and heated in winter) as heat carrier fluid. This kind of use made it until now impossible or highly not efficient the use of radiators as heating and/or cooling system terminals, so that the sole used until now are the so called "electric fans".

Even only for heating use (e.g.: winter), known radiator is always less used. In fact, needing of reducing energetic waste has involved, in the recent years, needing of using heat carrier fluid at always more low temperatures, in correspondence of which said radiators are not sufficiently efficient. Particularly, when maximum temperature of heat carrier fluid is higher than 55°C, heating systems are conventionally defined as "high temperature" systems; on the contrary, when maximum temperature of heat carrier fluid is lower than 55°C, heating systems are conventionally indicated as "low temperature" systems.

Said tendency to reduce the use of radiators even only for heating use is common both the heating systems using condensation boilers and in systems using heat pumps. Needing of keeping relatively low heat carrier fluid temperatures is due, in the first case, to the possibility of exploiting the evaporation latent heat of water contained within combustion products, and in the second case, to the needing of obtaining high performance efficiency, also known as COP (Coefficient of Performance), and thus low electric power consumption.

The use of conventional radiators in low temperature heating systems is strongly penalized by the fact that natural convective thermal exchange is remarkably reduced with reduction of ΛT between average temperature T_{f} of heat carrier fluid and temperature Tₐ of environment air to be heated (ΛT= T_{f} - Tₐ), and, consequently, for the same thermal requirement, conventional radiators take relevant dimensions.

Example of electric fans or of modified radiators, instead of conventional radiators, are for example described in documents US2006/174864A1, DE 202009002307U1 and FR 2947040A1.

However, none of the above examples is particularly efficient or permits obtaining a remarkable energetic saving.

In this context, it is included the solution suggested according to the present invention, permitting solving the above problems.

The object of the present invention is therefore that of permitting heating in an easy, quick, reliable, ecologic and economic way within a closed room, thus obtaining a remarkable energetic saving.

Further object of the present invention is that of permitting, even as an optional feature, cooling a closed room, thus obtaining the same simplicity, speed, reliability, environmental impact reduction, low costs and energetic saving results.

GB1518081, which is the most relevant prior art document, describes a radiator according to the preamble of independent claim 1.

It is therefore specific object of the present invention a radiator comprising one or more vertical heating elements, capable to receive a flow of a heat carrier fluid coming from a radiator inlet joint, further comprising at least one shaped wall coupled to a rear surface of said one or more vertical heating elements, said at least one shaped wall having a transverse profile defining at least one laminar channel delimited by said at least one shaped wall and by at least one portion of said one or more vertical heating elements and having a lower mouth and an upper mouth, whereby, when a heat carrier fluid having a temperature higher than a room temperature flows in said one or more vertical heating elements, room air follows a convective motion by entering said lower mouth and exiting from said upper mouth of said at least one laminar channel and absorbing heat from the heat carrier fluid flowing in said one or more vertical heating elements, said radiator being characterized in that it further comprise one or more additional heat exchange apparatuses, mounted on a rear surface of said at least one shaped wall, hydraulically connected downstream to said one or more vertical heating elements through at least one connecting pipe.

Always according to the invention, said at least one laminar channel can have a depth ranging from 0,8 cm to 2 cm, preferably ranging from 0,9 cm to 1,5 cm, more preferably equal to 1 cm.

Still according to the invention, said transverse profile of said at least one shaped wall can be an omega shaped transverse profile, comprising a central planar portion connected to two side planar portions, parallel to the central planar portion, through respective intermediate planar portions.

Always according to the invention, additional heat exchange apparatuses can be at least two hydraulically connected in parallel to each other.

Still according to the invention, each one of said one or more additional heat exchange apparatuses can comprise a finned heat exchanger, capable to receive a flow of a heat carrier fluid coming from said one or more vertical heating elements, that is housed in a housing provided with at least one lower opening, preferably a central lower opening, and with one or more upper openings, preferably a pair of upper openings, more preferably a pair of side upper openings, whereby, when a heat carrier fluid having a temperature higher than a room temperature flows in the finned heat exchanger, room air follows a convective path by entering said at least one lower opening and exiting from said one or more upper openings by absorbing heat from the heat carrier fluid flowing in the finned heat exchanger.

Further according to the invention, said housing can be defined by a rear surface of said at least one shaped wall, by two radiator side flanks coupled to said one or more vertical heating elements and provided with said at least one pair of side upper openings, and by a shaped cover provided with said at least one lower opening.

Always according to the invention, each one of said one or more additional heat exchange apparatuses can comprise an electric fan mounted in said housing in correspondence with said at least one lower opening, preferably that can be activated through an electronic control unit, more preferably comprising a display and activating and/or selecting keys.

Still according to the invention, radiator can further comprise three-way actuator means, comprising an inlet connected to the radiator inlet joint, a first outlet connected to said one or more vertical heating elements, and a second outlet connected to said at least one connecting pipe, whereby the second outlet of said actuator means is connected downstream to said one or more vertical heating elements and upstream to said one or more additional heat exchange apparatuses, the second outlet being closed when said first outlet is open, whereby the radiator inlet joint is connected to said one or more vertical heating elements, and said first outlet being closed when the second outlet is open, whereby the radiator inlet joint is connected to said one or more additional heat exchange apparatuses.

Further, according to the invention, said three-way actuator means can comprise three-way thermostatic actuator means, said inlet of said three-way thermostatic actuator means being capable to receive a flow of a heat carrier fluid coming from the radiator inlet joint, said three-way thermostatic actuator means being capable to open said first outlet for automatically routing the received flow at the inlet towards said one or more vertical heating elements when said heat carrier fluid has temperature higher than a, preferably adjustable, reference value, whereby the radiator operates in heating mode, and to open the second outlet for automatically routing the received flow at the inlet towards said one or more additional heat exchange apparatuses when said heat carrier fluid has temperature lower than said reference value, whereby the radiator operates in cooling mode.

Always according to the invention, the radiator provides an electronic control unit, the opening of said first outlet or second outlet is selectable through said electronic control unit, preferably comprising a display and activating and/or selecting keys.

Radiator according to the invention can be used in winter (i.e. heating) and possibly summer (i.e. cooling) acclimatization systems, permitting obtaining a high energy optimization in winter use, with reduced dimensions even if operating at low temperature and, in the embodiment used as terminal of water heating and cooling systems, permitting an optimum use for summer acclimatization.

Radiator according to the invention provides one or more vertical heating elements with reduced dimensions both as far as wall surface and thickness are concerned, since it has a remarkably higher thermal efficiency with respect to that of high temperature conventional radiators, so that reduction of number and dimensions of radiating elements with same performances. The above is obtained by specific heat carrier fluid (preferably water) flow paths, remarkably improving contribution to convective thermal exchange of radiating elements with room air to be heated, thus promoting "chimney effect", creating a powerful air natural convective motion.

Radiator according to the invention is provided with at least a supplementary thermal exchange apparatus of the finned heat exchanger, producing a further convective thermal exchange and determining a remarkable increase of available exchange surface with a further increase of natural convective contribution, i.e. of exchanged power, further permitting providing an optimized solution with respect to the real thermal needing of room to be heated. Particularly, radiator according to the invention is so realised to minimize dimensions of said supplementary apparatuses, making their presence not perceivable. Further, every supplementary apparatus is provided with a ventilation apparatus that, requiring reduced electric power absorption, if activated adds a further thermal exchange element for forced convection, particularly with an increase of radiator performances. Particularly, natural convective motion exchange with radiating elements and exchange convective motion, that is a natural and possibly forced motion, with supplemental apparatuses are not interfered each other, and air flow conformation on block of each supplemental apparatus permits applying two or more supplemental apparatuses provided in positions spaced each other along a vertical direction without the relevant convective flows (natural and possibly forced) are interfered each other. By a simple control unit, radiator permits to a user simple and personalized selection of the operation mode of the same radiator among forced convection and natural convection combination on one side, and natural convection only, on the other side.

Optionally, radiator according to the invention can also operate for cooling (i.e. summer acclimatization), so as to work only with forced ventilation part without flowing of heat carrier fluid within radiating elements: the above permits preventing creation of condensate that, instead, is easily collected and conveyed outward within supplemental apparatuses provided with ventilation device for forced convection. Switching from winter mode to summer mode (or vice versa) occurs automatically thanks to a self-operated thermostatic diverting valve.

In other words, when it operates under heating mode, radiator according to the invention ca work with maximum thermal power with forced ventilation device activated, thus permitting quick reaching of comfort temperature, both with forced ventilation device switched off, yielding lower thermal power that are in any case sufficient to maintain room thermal level and in any case higher than those of a conventional radiator with equivalent radiating elements. In fact, chimney effect due to vertical conformation of radiating elements guarantees high thermal efficiencies also when fans are switched off, and an exchange power which is high with respect to the dimensions. Thus, radiator according to the invention can be absolutely used for bedrooms, wherein it is necessary obtaining best results as far as operative noise is concerned. As far as summer acclimatization is concerned, radiator according to the invention works only with supplemental forced convection exchange apparatuses, thus guaranteeing, in each case, a comfort level equal to the one of standard electric fans, with respect to which it has reduced dimensions and higher installation flexibility, besides a better aesthetic aspect.

With the same operative conditions at high temperature, under a heating mode, radiator according to the invention has a thermal efficiency which is almost three times with respect to that of a standard radiator having the same wall dimensions (specifically at a room temperature corresponding to the average Italian temperature during winter). Further, while a conventional radiator cannot efficiently operate at low temperature, a radiator according to the invention operating at low temperature and providing ten radiating elements (just for exemplificative and not limitative purposes), each height 1800 mm, width 50 mm, thick 10 mm, and with a distance between two adjacent radiating elements of 56 mm, can satisfy thermal request (specifically for a room temperature corresponding to the average Italian temperature during winter) in a room having a net surface of 22 m², when ventilation devices are working, or of 16 m²; further, for a room temperature corresponding to the average Italian temperature during summer, radiator can also ensure summer acclimatization of a standard room (specifically for a room temperature corresponding to the average Italian temperature during winter).

Still further, radiator according to the invention is provided with sophisticated control electronics, permitting to the user to select operation mode.

Optimum heating efficiency of radiator according to the invention permits its installation on a wall as terminal of low temperature systems without the needing of radiating floor systems. The above permits replacing existing standard terminals by few manual intervention and with an easy adaptation of the same, using low temperature systems for total or partial renovation of existing buildings.

The present invention will be now described, for illustrative, but not limitative purposes, according to its preferred embodiments, with particular reference to the figures of the enclosed drawings, wherein:
figure 1 shows a left front perspective view (figure 1a), a right front perspective view (figure 1b), a rear view (figure 1c), a right side view (figure 1d) and a front view (figure 1e) of the preferred embodiment of radiator according to the invention;
figure 2 shows a flowchart of the operation principle of radiator of figure 1;
figure 3 shows a left rear perspective view of radiator of figure 1;
figure 4 shows a left rear perspective view of radiator of figure 1 in a heating mode (figure 4a) and a view of the transversal profile of a component (figure 4b) of radiator of figure 1;
figure 5 shows a left rear perspective view of radiator of figure 1, in a cooling mode;
figure 6 shows a graph representing results of first experimental tests carried out of radiator of figure 1;
figure 7 shows a graph representing results of second experimental tests carried out of radiator of figure 1; and
figure 8 shows a right rear perspective view of radiator of figure 1 (figure 8a) and its enlargement (figure 8b).

Same reference numbers will be used to indicate the same or similar parts in the different figures.

The preferred embodiment of radiator according to the invention will be described in the following, said radiator being provided with components necessary both the heating operation mode and the cooling operation mode, and particularly comprising two supplemental thermal exchange apparatuses, of the finned heat exchanger type, each one provided with ventilation device. However, it must be taken into consideration that other embodiments of the radiator according to the invention can also provide only one supplemental thermal exchange apparatus, or a number of supplemental thermal exchange apparatus higher than two, that further embodiments of radiator according to the invention can provide supplemental thermal exchange apparatus without ventilation devices, and that still further embodiments of the radiator according to the invention can only comprise components necessary for heating mode, and particularly they cannot provide any supplemental thermal exchange apparatus, still remaining within the scope of the invention as defined in the claims. Further, it must be taken into consideration that radiator according to the invention can further comprise vertical heating elements that can be of height and width widely different with respect to the preferred embodiment, with a combination of dimensions and number such that vertical radiating element radiator can have a mainly vertically extending configuration, or a mainly horizontally extending configuration, still remaining within the scope of the invention as defined in the claims.

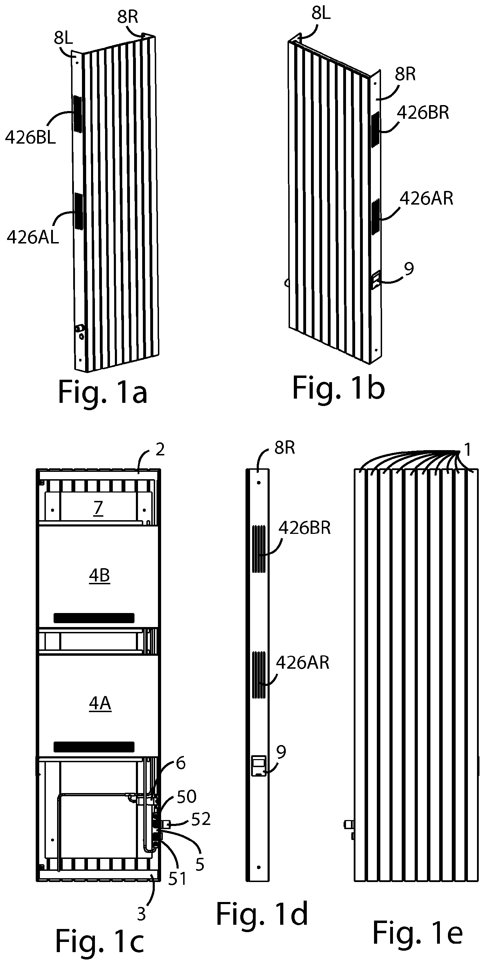

Preferred embodiment of radiator according to the invention is shown in figures 1, 3 - 5 and 8, wherein it can be noted radiator providing ten vertical heating elements 1 (which obviously are hollow elements), through which heat carrier fluid flows when radiator works under heating mode, conventionally connected to an upper delivery manifold 2 and to a return lower manifold 3. Lower manifold 3 is then connected in series with two supplemental thermal exchange apparatuses 4A and 4B, of the finned heat exchanger type; the two supplemental thermal exchange apparatuses 4A and 4B are hydraulically connected in parallel. Particularly, vertical heating elements 1, along with upper 2 and lower 3 manifolds are in the following also defines as radiating section and supplemental thermal exchange apparatuses 4A and 4B are indicated in the following as radiator exchange section. Components of radiator, including those not mentioned in the above, will be described in greater detail in the following with reference to figures 1, 3 - 5 and 8.

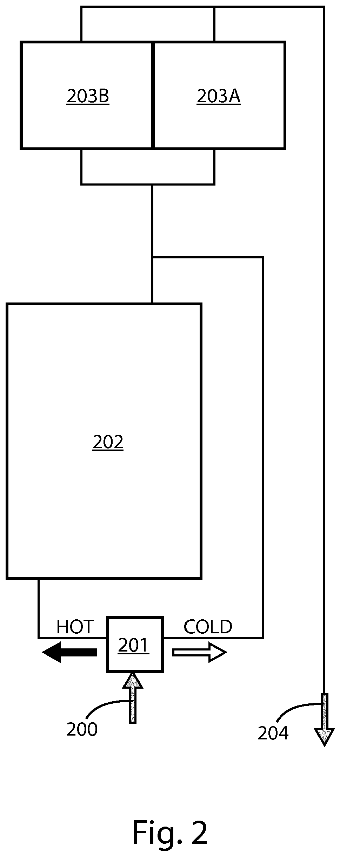

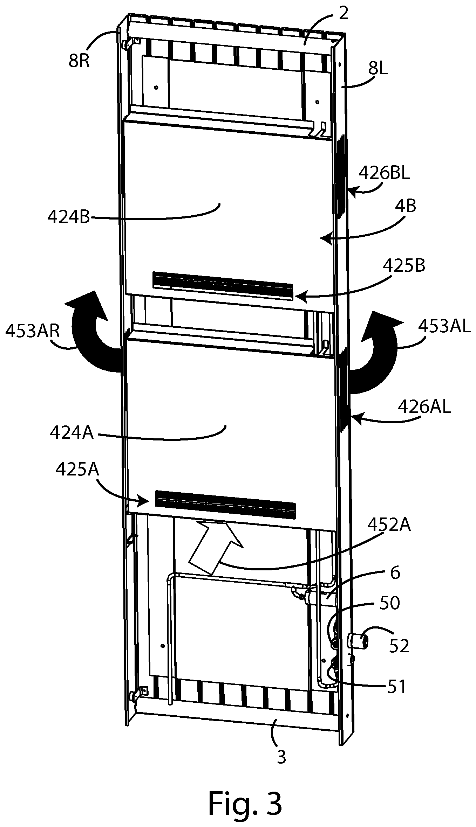

To better appreciate radiator according to the invention, it is convenient giving first an explanation of its operation, making reference to figures 2 and 3.

Figure 3 shows a flowchart synthetically illustrating operation principle of radiator according to the invention, that can automatically switch from winter operation mode, i.e. heating, to summer operation mode, i.e. cooling, and vice versa. Heat carrier fluid, preferably water, is introduced within radiator according to the invention through inlet section 200 (representing inlet joint 50 of inlet and outlet hydraulic group 5, shown in figure 1 and 3 - 5); when radiator is working in heating mode, heat carrier fluid has a temperature higher than room temperature, but lower than room temperature when radiator works under summer conditioning mode (i.e. cooling). A diverting section 201 (representing thermostatic switching 6 connected downward inlet and outlet hydraulic group 5 shown in figures 1, 3 - 5 and 8) or toward exchange section 203A - 203B (representing apparatuses 4A and 4B of supplemental thermal exchange hydraulically coupled in parallel each other, shown in figures 1, 3 - 5- and 8) on the basis of temperature of the same heat carrier fluid. In fact, switching section 201 comprises three-way thermostatic actuator means (preferably a thermostatic switch 6 with reduced dimensions, such as thermostatic switching valve of 3DV series, with ¾" M or 1" M joints, available from Behr Thermot-tronik Italia S.p.A.) physically entering switching heat carrier fluid toward radiating section 202 when fluid has a temperature higher than a reference value (e.g. within range 30° - 40°), preferably adjustable (e.g. adjustable at the factory), while when the fluid has a temperature lower than the reference value, thermostatic actuator means switch heat carrier fluid flow toward exchange section 203A - 203B. Thus, regardless heat carrier fluid temperature at inlet section 200, none particular control or adjustment activity is required by the user. Outlet from exchange section 203A - 203B is connected with inlet and exit hydraulic group 5 shown in figures 1 and 3 - 5), by which heat carrier fluid, preferably water, exits from radiator according to the invention.

In other words, in case of heating operation mode, entering heat carrier fluid has a temperature higher than reference value, which is preferably adjusted (e.g. adjusted at the factory) so that heat carrier fluid has a temperature higher than room temperature, and switching section 201 let fluid passing only into exchange section 203A - 203B (including parallel between supplemental thermal exchange apparatuses 4A and 4B) connected in series downward radiating section 202. As an exemplificative, but not limitative, indication, supplemental thermal exchange apparatuses of exchange section 203A - 203B can provide finned exchange batteries available from Sierra S.p.A., such as those known by 25 19 W01 08 01 18 0350 01 A10L. In said operation mode, radiator is active in all its thermal exchange sections (radiating 202 and exchanging 203A - 203B).

As an alternative, in case of cooling operation mode, inlet heat carrier fluid has a temperature lower than the reference value, which is preferably adjusted (e.g. adjusted at factory), so that heat carrier fluid has a temperature lower than room temperature, and switching section 201 makes fluid passing only through right branch of figure 2, toward exchange section 203A - 203B; consequently, fluid flows only into exchange section 203A - 203B. In this operation mode, radiator is only active for its exchange section 203A - 203B, so that condensate creation is prevented on the outer visible face of radiating elements 10, thus permitting an easy control of condensate occurring only on not visible components.

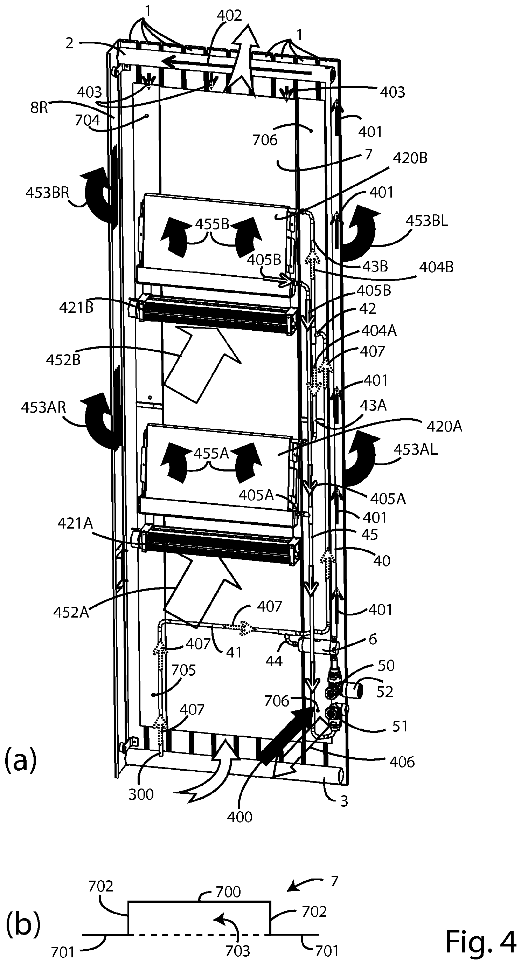

Figure 4 shows a rear perspective view of the preferred embodiment of radiator according to the invention during its heating mode, wherein there are schematically represented also heat carrier fluid flow within radiator hydraulic circuit and room air flow during thermal exchange with radiating and exchanging section of radiator. Thermal carrier fluid, arriving from inlet circuit of the heating system enters into inlet joint 50 of radiator (as schematically shown by arrow 400), flowing toward thermostatic switch 6, sending it only toward delivery upper manifold 2 by a first exit of thermostatic switch 6 connected to a first thermally insulated tube 40 (as schematically represented by arrows 401). In figure 4 it is also shown a standard adjustment device 52 for sectioning and/or adjusting hydraulic circuit load, said device being manually controlled and/or electronically controlled and/or powered. Heat carrier fluid flows within upper manifold 2 (schematically represented by arrow 402), supplying vertical heating elements 1 (as schematically represented by arrows 403) producing a first thermal exchange with room air irradiating heat within the environment wherein radiator is installed.

A shaped wall 7 is integral (preferably removable) to the rear portion of vertical heating elements 1, said wall 7 separating two finned heat exchanger supplemental thermal exchange apparatuses 4A and 4B (figure 4A shows components), thus permitting that thermal exchange between radiating elements 1 and air is substantially not modified by presence of two supplemental thermal exchange apparatuses 4A and 4B, and that performance levels of radiating elements 1 are substantially equal to those reached by the same radiating elements 1 in a radiator without supplemental thermal exchange apparatuses. Particularly, supplemental thermal exchange apparatuses 4A and 4B are mounted on rear surface of shaped wall 7, permitting an optimum positioning.

As shown in figure 4b, wall 7 is shaped with an Ω cross-section, comprising a central planar portion 700 connected with two lateral planar portions 701, parallel with respect to the central planar portion 700, by relevant intermediate planar portions 702, perpendicular with respect to the central planar portion 700 and with respect to the two lateral planar portions 701, so that wall devices a laminar channel 703 having such a depth equal to the distance between plane of central planar portion 700 and plane of lateral planar portions 701; depth of laminar channel 703 is preferably variable between 0.8 cm and 2.0 cm, more preferably between 0.9 cm and 1.5 cm, still more preferably 1 cm. Making also reference to figure 4a, when shaped wall 7 is integrally coupled with radiating elements 1, laminar channel 703, vertically oriented, creates a chimney effect due to negative pressure of upper portion of laminar channel 703 with respect to lower portion, so that environment air follows a convective motion entering from lower mouth and exiting from upper mouth of laminar channel 703 (as schematically represented by arrows 450 and 451, respectively); thanks to the value of laminar channel depth 703, which is of 1 cm in the preferred embodiment of radiator shown in the figures (and in any case within the range 0.8 cm - 2 cm), air within laminar channel 703 is substantially a layer conveyed in an ordered way, following said convective motion, thus making particularly efficient thermal exchange between radiating element and environment air. Other embodiments of radiator according to the invention can provide that, optionally, shaped wall 7 can be provided with a opposed plate (not shown) fixed to the same wall and such to couple with radiating elements 1, always remaining within the scope of the present invention.

Advantageously, shaped wall 7 is removable coupled with two radiating elements 1 by two (or even more than two) pairs of screws 704 - 705 and 706 - 707, that can be removable fixed in relevant pins welded in said two radiating elements 1. Particularly, shaped wall 7 hides to the user, when viewing frontally said radiating elements 1, components mounted in the rear of the same radiating elements 1, particularly two supplemental thermal exchange apparatuses 4A, 4B.

It is well evident from figure 4a that abduction of heat carrier fluid occurs in a downward direction, with a position each other of inlet point 200 (in the delivery upper manifold 2) and exit point 300 (in return lower manifold 3), with a crossed operation. Heat carrier fluid, passing through thermal exchange radiating section, comprising radiating elements 1, and yields part of its thermal content to the environment, having at the outlet, i.e. in return lower manifold 3. As already said, heat exchange occurs with performance levels growing with growing both of average temperature T_{f} of heat carrier fluid and ΛT between fluids involved in thermal exchange, i.e. difference of average temperature T_{f} of heat carrier fluid and temperature Tₐ of room air to be heated (ΛT=Tₜ-Tₐ).

Even having yielded its thermal content. Heat carrier fluid exiting from thermal exchange radiating section still has remarkable energy content, so that two supplemental thermal exchange apparatuses 4A and 4B connected downward return lower manifold 3 permits a further thermal exchange. Particularly, exit 300 of return lower manifold 3 is connected to a second insulated tube 41, by which heat carrier fluid is run (as schematically shown by arrows 407), said second insulated tube 41 being connected with a T joint 42, connected to two third insulated tubes 43A and 43B by which heat carrier fluid is run (as schematically shown by arrows 404A and 404B) within said two supplemental thermal exchange apparatuses 4A and 4B, each one comprising a finned heat exchanger, respectively indicated by reference numbers 412A and 421B. Second insulated tube 41 is further connected to a second exit 44 of thermostatic switch 6, which, however, when in the heating mode shown in figure 4a, is closed.

As better shown in figures 1, 3 and 8, two supplemental thermal exchange apparatuses 4A and 4B are physically separated each other and confined within relevant housings defined by rear surface of central planar portion 700 of shaped wall 7, by radiator lateral flanks 8R and 8L, integrally coupled (preferably removable) to radiating elements 1, and by relevant shaped covers 424A and 424B, each one provided with a lower opening, respectively 425A and 425B, in correspondence of its electric fan 421A or 421B. Particularly, covers 424A and 424B, integrally coupled, preferably removable, to the shaped wall 7 and/or lateral flanks 8R and 8L, close relevant finned heat exchanger (420A and 420B within the relevant housing, communicating outside only through said lower opening, respectively 425A and 425B, and through a pair of upper lateral openings (in figure 3 it is possible observing only left opening, respectively 426BL and 426BL) of the two lateral flanks 8R and 8L. Preferably, two lower openings 425A and 425B and two pairs of upper lateral openings (e.g. 426AL and 426BL) are provided with lattice. Optionally, two lateral flanks 8R and 8L can be comprised of holed sheet.

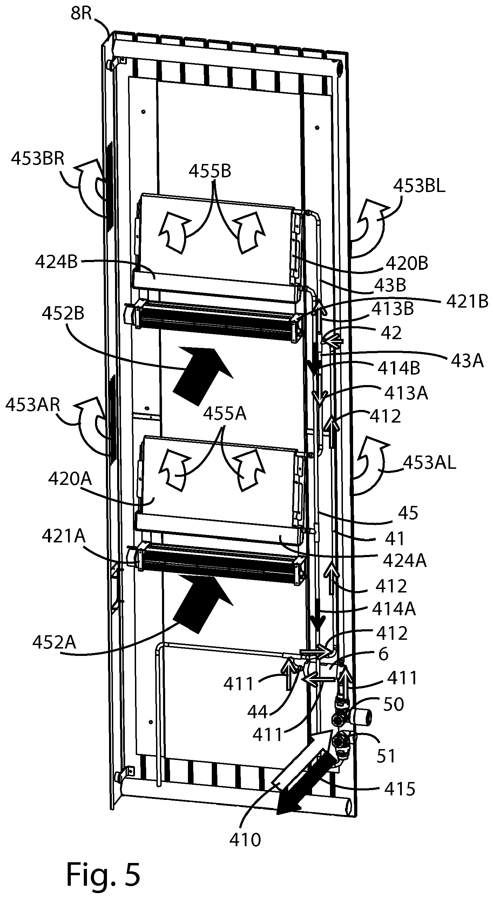

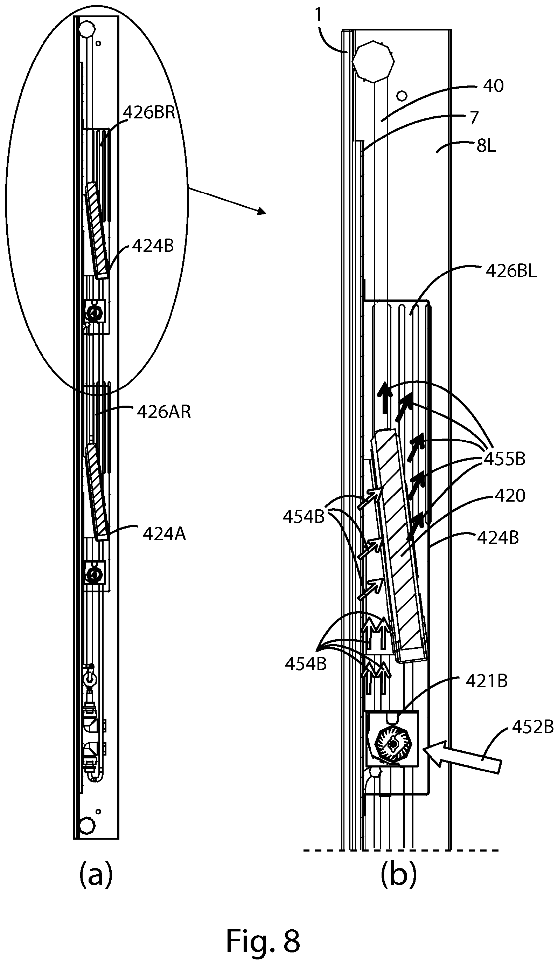

Making reference to figures 3, 4A and 8, room air, being at a temperature lower than heat carrier fluid, enters (as schematically shown by arrows 452A and 452B) within housing of each finned heat exchanger 420A and 420B through lower opening 425A or 425B of relevant cover 424A or 424B, exiting (as schematically represented by pairs of arrows 453AR - 453AL and 453BR - 453BL) from upper lateral openings (e.g. 426AL or 426BL) of the two lateral flanks 8R and 8L, after having passed through (as schematically represented by arrows 454B, upward finned heat exchanger 420B of figure 8, and by arrows 455A and 455B, downward respective heat exchanger 420A and 420B, of figures 5 and 8) finned heat exchanger 420A or 420B wherein heat carrier fluid flows, so that environment air absorbs heat from heat carrier fluid. Particularly, environment air enters within housing of each finned heat exchanger 420A and 420B not only under forced conditions, i.e. when respective electric fan 421A or 421B is switched on, but even if the latter is switched off, since dimensions of the housing are such that within the same an air natural convective path is realised also when respective electric fans 421A or 421b is switched off. Positioning of inlet lower openings 425A and 425B on covers 424A or 424B and of corresponding upper lateral openings (e.g. 426AL or 426BL) on the two lateral flanks 8R and 8L determines efficient separation of inlet air flows with respect to air flows exiting from finned heat exchangers 420A and 420B housings, so that air flows contributing to heat exchange with two apparatuses 4A and 4B do not interfere each other, even if two supplemental exchange apparatuses 4A and 4B are vertically provided each other; in other words, no reduction of efficiency of heat exchange occurs, caused by upper apparatus 4B due to air flow in lower apparatus 4A.

Further, hydraulic connection in parallel between two finned heat exchangers 420A and 420B ensures same thermal exchange in the two apparatuses 4A and 4B.

By a fourth tube 45, heat carrier fluid exiting from two supplemental exchange apparatuses 4A and 4B is conveyed (as schematically represented by arrows 405A and 405B) toward outlet joint 51 from inlet and outlet hydraulic group 5, from which goes toward return circuit of heating system (as schematically shown by arrow 406).

Preferably, as shown in figure 4a for first insulated tube 40, part of the second insulated tube 41, T joint 42, third insulated tubes 43A and 43B and fourth tube 45, most of tubes of hydraulic circuit of radiator is positioned in at least a lateral rear cut defined above a corresponding lateral planar portion 701 of the shaped wall 7.

Figure 5 shows a rear perspective view of the preferred embodiment of radiator according to the invention during its operation in the cooling mode, wherein there are also schematically represented heat carrier fluid flow within hydraulic circuit of radiator and room air flow during thermal exchange with exchange section of radiator. Heat carrier fluid, arriving from delivery circuit of cooling system, enters within radiator inlet joint 50 (as schematically represented by arrow 410) flowing toward thermostatic switch 6, routing the same only toward second exit 44 (as schematically represented by arrows 411) connected to the second insulated tube 41, along which heat carrier fluid flows (as schematically represented by arrows 412) up to T joint 42 connected to two third insulated tubes 43A and 43B by which heat carrier fluid is brought (as schematically represented by arrows 413A and 413B) to finned heat exchangers 420A and 420B, respectively of two supplemental thermal exchange apparatuses 4A and 4B, provided with electric fans 421A and 421B, respectively. By fourth tube 45, heat carrier fluid exiting from said two supplemental thermal exchange apparatuses 4A and 4B is conveyed (as schematically represented by arrows 414A and 414B) toward exit joint 51 of inlet and exit hydraulic group 5, from which it goes toward return circuit of cooling system (as schematically represented by arrow 415). It must be taken into consideration that, in cooling mode shown in figure 5, first exit from thermostatic switch 5, connected to first insulated tube 40 is closed, so that heat carrier fluid does not flow along hydraulic circuit of radiating section (interrupted by said first exit of thermostatic switch 6).

Making reference to figures , 5 and 8, in cooling mode, room air, that is at a temperature higher than heat carrier fluid, enters (as schematically shown by arrows 452A and 452B) within housing of finned heat exchanger 420A and 420B through lower opening 425A or 425B of relevant cover 424A or 424B, exiting (as schematically represented by pairs of arrows 453AR - 453AL and 453BR - 453BL) of two lateral flanks 8R and 8L after having passed (as schematically represented by arrows 454B, upward finned heat exchanger 420B, figure 8, and by arrows 455A and 455B, downward relevant heat exchanger 420A and 420B, figures 5 and 8) finned heat exchanger 420A or 420B wherein heat carrier fluid flows, so that room air yields heat to heat carrier fluid, thus cooling. Particularly, room air forcedly enters within housing of each finned heat exchanger 420A and 420B, pushed by respective electric fan 421A or 421B.

In other words, when in the cooling mode, heat carrier fluid is only brought to two supplemental exchange apparatuses 4A and 4B, where finned heat exchanger 420A and 420B exchange heat with room air (namely they absorb heat from room air) that is forced to enter within two supplemental exchange apparatuses 4A and 4B by the action of electric fans 421a and 421B. Limitation to the use of only the two supplemental exchange apparatuses 4A and 4B is due to the technical needing of preventing that condensate phenomenon of vapour in outside air occurs on outside visible surfaces of radiating elements 1. Condensate on supplemental exchange apparatuses 4A and 4B is managed by suitable manual and/or automatic collection and moving away instruments.

For example, preferred embodiment of radiator according to the invention comprises for each finned heat exchanger, a condensate collection tank, respectively 424A and 424B. In case a manual discharge of condensate is provided, at least one of the two lateral flanks 8R and 8L of radiator is at least partially removable to permit to the user to reach tanks 424A and 424b. In case an automatic discharge of condensate is provided, radiator is provided with suitable tubes (not shown) connected with tanks 424A and 424B, which, by the sloped provision of tanks and/or tubes, conveys by gravity condensate toward a centralized discharge system.

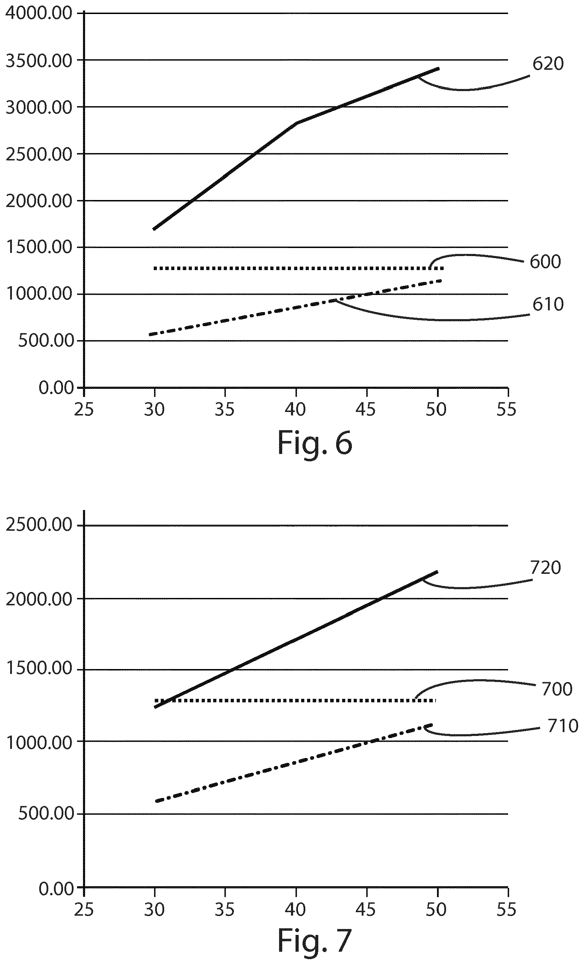

Figure 6 shows a Cartesian graph representing results of experimental tests carried out on preferred embodiment of radiator according to the invention, wherein abscissa represent ΛT difference (in Celsius degrees) between average temperature T_{f} of heat carrier fluid and room air temperature Tₐ to be heated (ΛT = T_{f} - Tₐ), while ordinate represents delivered thermal power (Watt). Graph was obtained by taking into consideration heating mode of preferred embodiment of radiator according to the invention under maximum performances, i.e. with electric fans 421A and 421B at maximum speed. Curve 600 represents ideal average thermal needing of a standard room to be heated with a net surface of 16 m² (with a room temperature corresponding to winter Italian average temperature); curve 610 represents power delivered by a standard radiator (specifically ROSY VERTICALE radiator, wide 560 mm and height 1800 mm, available from Cordivari S.r.l.) with en radiating elements having the same dimensions of radiating elements 1 of preferred embodiment of radiator according to the invention (namely, every radiating element is height 1800 mm, wide 50 mm and thick 10 mm, and distance between two adjacent radiating elements of 56 mm); curve 420 represents delivered power of preferred embodiment of radiator according to the invention. It is easy noting that preferred embodiment of radiator according to the invention has performances remarkably higher than needing 600, both under operative conditions with a high temperature difference and with low temperature difference, while said performances are not obtained with known radiators. The latter point demonstrate that radiator according to the invention can be advantageously used in systems with high energy efficiency, wherein choice of renewable energy sources and high efficiency systems (e.g. heat pumps and condensation boilers) imposes an operation with low temperature difference. By taking into consideration a standard room with a net surface to be heated of 22 m² (with a room temperature corresponding to the winter Italian average temperature) determines experimental results not too much different with respect to those shown in figure 6.

Figure 7 shows a Cartesian graph similar to the graph of figure 6 (ΛT difference in abscissa and delivered thermal power in ordinate), representing results of experimental tests carried out by same radiators employed for tests of figure 6, wherein the operation mode of radiator according to the invention having standard performances has been taken into consideration only with the natural convective operation, i.e. with electric fans 421A and 421B switched off. Curve 700 represents ideal average thermal needing for a standard room to be heated with a net surface of 16 m² (with a room temperature corresponding to winter Italian average temperature); curve 710 represents power delivered by a standard radiator; and curve 720 represents power delivered by preferred embodiment of radiator according to the invention. It is easy noting that preferred embodiment of radiator according to the invention still has performances remarkably higher under high ΛT operation mode, while it satisfies needing 700 with low temperature difference, while said performances are not obtained with known radiators. Again, The latter point demonstrate that radiator according to the invention is advantageously used in systems with high energy efficiency, wherein choice of renewable energy sources and high efficiency systems (e.g. heat pumps and condensation boilers) imposes an operation with low temperature difference.

It is known that, taking into consideration two single column radiators (i.e. having a plurality of radiating elements placed side by side), one of which having vertical heating elements (i.e. the main dimension of which is width), having the same dimensional features (i.e. the same number and type of radiating elements, same height of first one and width of the second one), thermal efficiency between two terminals is practically the same, but for few differences, better for horizontal model.

Contrary to the known technique, radiator according to the invention with vertical radiating element gives a remarkable amplification of performances thanks to technical solutions described in the above, with particular reference to the chimney effect phenomenon, due to specific pressure difference between lower zone and upper zone of laminar channel 703 defined by shaped wall 7, when integrally coupled with radiating elements 1, so that room air follows a convective path entering through lower mouth and exiting from upper mouth of laminar channel 703, thus triggering natural convective energy motion promoting thermal exchange, also improved by the fact that vertical positioning of radiating elements 1 does not determine any physical restraint to air mass flow.

Preferred embodiment of radiator according to the invention also comprises a control electronic unit (of which in figure 1 it is shown user interaction interface 9, preferably comprising a display and operation and/or selection buttons), permitting to the user selecting activation of electric fans 421A and 421B.

Particularly, by control electric unit, it is also possible realising either a manual or programmed control. For manual control, it is possible selecting a natural operation mode, i.e. with electric fans switched off, in case a reduced heat provision, only using natural convection phenomenon (e.g. to maintain temperature regime), or a forced heating operation mode, i.e. with electric fans switched on, in case an upper heat provision is needed with a quick action. In case of programmed control, user can advantageously program daily switching on and off during 24 hours, all along the week.

As shown in figure 1, interaction interface 9 of control electronic unit is ergonomically positioned along a lateral flank (in figure 1 right lateral flank 8R), while control electronic unit, comprising a dedicated electronic board is housed within a said lateral flank. Electric supply of radiator (particularly of control electronic unit and electric fans 421A and 421B) has a very low network tension, preferably by a general transformer upward electric circuit and close to the inlet of general supply cable from the wall on which radiator is mounted, thus ensuring a higher safety, i.e. general transformer can be placed outside radiator, suitably integrated into walls of rooms, within suitable containment systems and electric supply of radiator wholly occurs up to its inlet within the same at a very low network tension. As already said, control electronic unit controls switching on and switching off of electric fans 421A and 421B, and optionally relevant operation speed, on the basis of settings input by the user through interaction interface 9.

Advantageously, to protect with respect to not wished operation, radiator is provided with a temperature probe that in case of heat carrier fluid having a temperature lower than a specific threshold when radiator operates in a heating mode, preventing operation of electric fans 421A and 421B; like, when radiator operates in a cooling mode inhibition of electric fans 421A and 421B is actuated when heat carrier fluid has a temperature higher than a specific threshold value. Conventionally, it is provided a central switch that, controlling power electric connection, permits full switching off of radiator electronic, i.e. said switch is provided outside radiator when transformer of the same is outside and integrated in walls of the rooms within suitable containment systems and main supply is only very low tension.

Number of radiating elements of radiator according to the invention is not an essential feature, and other embodiments can provide every number of radiating elements different from ten, with relevant height of the same that can be variable within a wide range.

Other embodiments of radiator according to the invention ca provide, in combination or as an alternative to the automatic switching of heat carrier fluid by thermostatic actuating means, as those described in the first embodiment, a not automatic switching realised by mechanical three-way actuator means, manually operated by user (e.g. three-way ball sphere PN-25-16 available from Mival S.r.I.) or by electronic control three-way actuating means (such as powered ball switching valve with three contacts control, series 6443 available from Caleffi S.p.A.= that can be selected by the user (preferably by control electronic unit that can select operation mode of radiator between heating and cooling, i.e. by systems outside radiator).

Further embodiments of the present invention, wherein it is not provided that radiator operates in cooling mode, are not provided with a thermostatic switch 6 or with other thermostatic actuating means, not being it necessary switching entering heat carrier fluid between two possible paths.

Still other embodiments of radiator according to the invention can provide that shaped wall coupled with radiating elements has a cross section different with respect to omega cross section shown in figure 4b, provided that it defines at least a laminar channel with a depth preferably ranging between 0.8 cm and 2 cm, more preferably ranging between 0.9 and 1.5 cm, still more preferably 1 of 1 cm. For example, without any intention of limiting the scope of the invention, cross section could be similar to the one shown in figure 4b, wherein, however intermediate planar portions 702 are not perpendicular to the central planar portion 700 and to the two lateral planar portions 701, and particularly intermediate planar portions 702 could be curvilinear; further, cross section of shaped wall even define more than one laminar channel.

Further, other embodiments of radiator according to the invention can provide, mainly in case of a big height of radiator, that two or more shaped walls are coupled, preferably removable coupled, to the rear surface of radiating elements.

Still, further embodiments of radiator according to the invention can provide that every supplemental thermal heat exchange apparatus is housed within a housing which is different with respect to the one shown with reference to the preferred embodiment. For example, shaped cover can provide one or more pairs of lateral wings, fixed to lateral flanks of radiator or to suitable seats, e.g. integral with vertical heating elements, replacing corresponding portions of radiator lateral flanks. Further, housing of every supplemental thermal heat exchange apparatus can comprise, as an alternative, or in combination with a central lower opening, as shown for preferred embodiment of radiator according to the invention, a lower opening, even provided in a lateral position, e.g. in correspondence of lateral flanks of radiator; in the same way, said housing can comprise, as an alternative, or in combination with a pair of upper lateral openings provided in lateral flanks of radiator, a single upper opening, positioned laterally (e.g. in correspondence of one of the lateral flanks of radiator) or centrally. For example, without any intention of limiting the scope of the invention, housing of every supplemental thermal heat exchange apparatus could comprise a right lateral lower opening, provided on right flank 8R of radiator, and a single left lateral upper opening, positioned on left flank 8L of radiator.

Furthermore, other embodiments of radiator according to the invention can provide that every supplemental thermal heat exchange apparatus comprises, instead of a finned heat exchange as described with reference to the preferred embodiment, other heat exchange devices, such as those finned tube available from CIAT Italy (see website http://www.ciat-italia.it/rubrique/index/ita-les-produits/101/tubi-alettati/447), or finned tubes available from DAV COIL S.r.l. (see website http://www.davcoil.com/ita/tubialettati.html).

Preferred embodiments of the present invention have been described in the above for illustrative, but not limitative purpose, but it is to be understood that modifications and changes can be introduced by those skilled in the art without departing from the scope as defined in the enclosed claims.

## Claims

1. Radiator comprising one or more vertical heating elements (1), capable to receive a flow of a heat carrier fluid coming from a radiator inlet joint (50), comprising at least one shaped wall (7) coupled to a rear surface of said one or more vertical heating elements (1), said at least one shaped wall (7) having a transverse profile defining at least one laminar channel (703) delimited by said at least one shaped wall (7) and by at least one portion of said one or more vertical heating elements (1) and having a lower mouth and an upper mouth, whereby, when a heat carrier fluid having a temperature higher than a room temperature flows in said one or more vertical heating elements (1), room air follows a convective motion by entering said lower mouth and exiting from said upper mouth of said at least one laminar channel (703) and absorbing heat from the heat carrier fluid flowing in said one or more vertical heating elements (1), said radiator being **characterized in that** it further comprises one or more additional heat exchange apparatuses (4A, 4B), mounted on a rear surface of said at least one shaped wall (7), hydraulically connected downstream to said one or more vertical heating elements (1) through at least one connecting pipe (41).

2. Radiator according to claim 1, **characterised in that** said at least one laminar channel (703) has depth ranging from 0,8 cm to 2 cm, preferably ranging from 0,9 cm to 1,5 cm, more preferably equal to 1 cm.

3. Radiator according to claim 1 or 2, **characterised in that** said transverse profile of said at least one shaped wall (7) is a omega shaped transverse profile, comprising a central planar portion (700) connected to two side planar portions (701), parallel to the central planar portion (700), through respective intermediate planar portions (702).

4. Radiator according to any one of the preceding claims, **characterised in that** the additional heat exchange apparatuses (4A, 4B) are at least two hydraulically connected in parallel to each other.

5. Radiator according to any one of the preceding claims, **characterised in that** each one of said one or more additional heat exchange apparatuses (4A, 4B) comprises a finned heat exchanger (420A, 420B), capable to receive a flow of a heat carrier fluid coming from said one or more vertical heating elements (1), that is housed in a housing provided with at least one lower opening (425A, 425B), preferably a central lower opening, and with one or more upper openings (426AR-426AL, 426BR-426BL), preferably a pair of upper openings, more preferably a pair of side upper openings, whereby, when a heat carrier fluid having a temperature higher than a room temperature flows in the finned heat exchanger (420A, 420B), room air follows a convective path by entering said at least one lower opening (425A, 425B) and exiting from said one or more upper openings (426AR-426AL, 426BR-426BL) by absorbing heat from the heat carrier fluid flowing in the finned heat exchanger (420A, 420B).

6. Radiator according to claim 5, **characterised in that** said housing is defined by a rear surface of said at least one shaped wall (7), by two radiator side flanks (8R, 8L) coupled to said one or more vertical heating elements (1) and provided with said at least one pair of side upper openings (426AR-426AL, 426BR-426BL), and by a shaped cover (424A, 424B) provided with said at least one lower opening (425A, 425B).

7. Radiator according to claim 5 or 6, **characterised in that** each one of said one or more additional heat exchange apparatuses (4A, 4B) comprises an electric fan (421A, 421B) mounted in said housing in correspondence with said at least one lower opening (425A, 425B), preferably activated through an electronic control unit, more preferably comprising a display and activating and/or selecting keys.

8. Radiator according to any one of preceding claims, **characterised in that** it further comprises three-way actuator means (6), comprising an inlet connected to the radiator inlet joint (50), a first outlet connected to said one or more vertical heating elements (1), and a second outlet (44) connected to said at least one connecting pipe (41), whereby the second outlet (44) of said actuator means (6) is connected downstream to said one or more vertical heating elements (1) and upstream to said one or more additional heat exchange apparatuses (4A, 4B), the second outlet (44) being closed when said first outlet is open, whereby the radiator inlet joint (50) is connected to said one or more vertical heating elements (1), and said first outlet being closed when the second outlet (44) is open, whereby the radiator inlet joint (50) is connected to said one or more additional heat exchange apparatuses (4A, 4B).

9. Radiator according to claim 8, **characterised in that** said three-way actuator means comprises three-way thermostatic actuator means (6), said inlet of said three-way thermostatic actuator means (6) being capable to receive a flow of a heat carrier fluid coming from the radiator inlet joint (50), said three-way thermostatic actuator means (6) being capable to open said first outlet for automatically routing the received flow at the inlet towards said one or more vertical heating elements (1) when said heat carrier fluid has temperature higher than a, preferably adjustable, reference value, whereby the radiator operates in heating mode, and to open the second outlet (44) for automatically routing the received flow at the inlet towards said one or more additional heat exchange apparatuses (4A, 4B) when said heat carrier fluid has temperature lower than said reference value, whereby the radiator operates in cooling mode.

10. Radiator according to claim 8 or 9, **characterised in that** it provides an electronic control unit, the opening of said first outlet or second outlet (44) is selectable through said electronic control unit, preferably comprising a display and activating and/or selecting keys.

## Patentansprüche

1. Heizkörper mit einem oder mehreren vertikalen Heizelementen (1), die in der Lage sind, einen Strom eines Wärmeträgerfluids aufzunehmen, das von einer Heizkörpereinlassöffnung (50) kommt, mit mindestens einer geformten Wand (7), die mit einer Rückseite des einen oder der mehreren vertikalen Heizelemente (1) verbunden ist, wobei die mindestens eine geformte Wand (7) ein Querprofil aufweist, das mindestens einen laminaren Kanal (703) definiert, der durch die mindestens eine geformte Wand (7) und durch mindestens einen Abschnitt des einen oder der mehreren vertikalen Heizelemente (1) begrenzt ist und eine untere Öffnung und eine obere Öffnung aufweist, wodurch, wenn ein Wärmeträgerfluid mit einer Temperatur höher als eine Raumtemperatur in dem einen oder den mehreren vertikalen Heizelementen (1) fließt, Raumluft einer konvektiven Bewegung folgt, indem sie in die untere Öffnung eintritt und aus der oberen Öffnung des mindestens einen laminaren Kanals (703) austritt und Wärme von dem Wärmeträgerfluid absorbiert, das in dem einen oder den mehreren vertikalen Heizelementen (1) fließt, wobei der Heizkörper **dadurch gekennzeichnet ist, dass** er ferner eine oder mehrere zusätzliche Wärmeaustauschvorrichtungen (4A, 4B) umfasst, die an einer Rückseite der mindestens einen geformten Wand (7) angebracht sind, die über mindestens ein Verbindungsrohr (41) mit dem einen oder den mehreren vertikalen Heizelementen (1) hydraulisch verbunden sind.

2. Heizkörper nach Anspruch 1, **dadurch gekennzeichnet, dass** der mindestens eine laminare Kanal (703) eine Tiefe im Bereich von 0,8 cm bis 2 cm, vorzugsweise im Bereich von 0,9 cm bis 1,5 cm, vorzugsweise gleich 1 cm, aufweist.

3. Heizkörper nach Anspruch 1 oder 2, **dadurch gekennzeichnet, dass** das Querprofil der mindestens einen geformten Wand (7) ein omegaförmiges Querprofil ist, das einen zentralen ebenen Abschnitt (700) umfasst, der mit zwei seitlichen ebenen Abschnitten (701) parallel zu dem zentralen ebenen Abschnitt (700) durch entsprechende planare Zwischenabschnitte (702) verbunden ist.

4. Heizkörper nach einem der vorhergehenden Ansprüche, **dadurch gekennzeichnet, dass** die zusätzlichen Wärmeaustauschvorrichtungen (4A, 4B) mindestens zwei hydraulisch parallel zueinander geschaltet sind.

5. Heizkörper nach einem der vorhergehenden Ansprüche, **dadurch gekennzeichnet, dass** jede der zusätzlichen Wärmeaustauschvorrichtungen (4A, 4B) einen Rippenwärmetauscher (420A, 420B) umfasst, der in der Lage ist, einen Strom eines Wärmeträgerfluids aufzunehmen, das von dem einen oder den mehreren vertikalen Heizelementen (1) kommt, der in einem Gehäuse untergebracht ist, das mit mindestens einer unteren Öffnung (425A, 425B), vorzugsweise einer zentralen unteren Öffnung, und mit einer oder mehreren oberen Öffnungen (426AR-426AL, 426BR-426BL) versehen ist, vorzugsweise einem Paar von oberen Öffnungen, insbesondere einem Paar von seitlichen oberen Öffnungen, wobei, wenn ein Wärmeträgerfluid mit einer Temperatur höher als eine Raumtemperatur in dem Rippenwärmetauscher (420A, 420B) strömt, Raumluft einem konvektiven Weg folgt, indem sie in die mindestens eine untere Öffnung (425A, 425B) eintritt und aus der einen oder den mehreren oberen Öffnungen (426AR-426AL, 426BR-426BL) austritt, indem sie Wärme von dem Wärmeträgerfluid absorbiert, das in dem Rippenwärmetauscher (420A, 420B) fließt.

6. Heizkörper nach Anspruch 5, **dadurch gekennzeichnet, dass** das Gehäuse durch eine Rückseite der mindestens einen geformten Wand (7), durch zwei mit dem einen oder den mehreren vertikalen Heizelementen (1) verbundene und mit dem mindestens einen Paar von seitlichen oberen Öffnungen (426AR-426AL, 426BR-426BL) versehene Heizkörperseitenflanken (8R, 8L) und durch einen mit der mindestens einen unteren Öffnung (425A, 425B) versehenen geformten Deckel (424A, 424B) definiert ist.

7. Heizkörper nach Anspruch 5 oder 6, **dadurch gekennzeichnet, dass** jede der genannten zusätzlichen Wärmeaustauschvorrichtungen (4A, 4B) einen elektrischen Lüfter (421A, 421B) umfasst, der in dem genannten Gehäuse entsprechend der genannten mindestens einen unteren Öffnung (425A, 425B) montiert ist, vorzugsweise durch eine elektronische Steuereinheit aktiviert, die vorzugsweise eine Anzeige und Aktivierungs- und/oder Auswahltasten umfasst.

8. Heizkörper nach einem der vorhergehenden Ansprüche, **dadurch gekennzeichnet, dass** er ferner eine Dreiwege-Betätigungseinrichtung (6) umfasst, die einen mit der Heizkörpereingangsverbindung (50) verbundenen Eingang, einen mit dem einen oder den mehreren vertikalen Heizelementen (1) verbundenen ersten Ausgang und einen mit dem mindestens einen Verbindungsrohr (41) verbundenen zweiten Ausgang (44) umfasst, wobei der zweite Ausgang (44) der Betätigungseinrichtung (6) stromabwärts mit dem einen oder den mehreren vertikalen Heizelementen (1) und stromaufwärts mit dem einen oder den mehreren zusätzlichen Wärmeaustauschvorrichtungen (4A, 4B) verbunden ist, wobei der zweite Auslass (44) geschlossen ist, wenn der erste Auslass offen ist, wobei die Heizkörpereinlassverbindung (50) mit dem einen oder den mehreren vertikalen Heizelementen (1) verbunden ist, und der erste Auslass geschlossen ist, wenn der zweite Auslass (44) offen ist, wobei die Heizkörpereinlassverbindung (50) mit der einen oder den mehreren zusätzlichen Wärmeaustauschvorrichtungen (4A, 4B) verbunden ist.

9. Heizkörper nach Anspruch 8, **dadurch gekennzeichnet, dass** die Drei-Wege-Betätigungseinrichtung eine Drei-Wege-Thermostat-Betätigungseinrichtung (6) umfasst, wobei der Einlass der Drei-Wege-Thermostat-Betätigungseinrichtung (6) in der Lage ist, einen Strom eines Wärmeträgerfluids aufzunehmen, das von der Heizkörpereinlass-Verbindung (50) kommt, wobei die Drei-Wege-Thermostat-Betätigungseinrichtung (6) in der Lage ist, den ersten Auslass zu öffnen, um den empfangenen Strom am Einlass automatisch zu dem einen oder den mehreren vertikalen Heizelementen (1) zu leiten, wenn das Wärmeträgerfluid eine höhere Temperatur als ein vorzugsweise einstellbarer Referenzwert hat, wobei der Heizkörper im Heizbetrieb arbeitet, und zum Öffnen des zweiten Auslasses (44) zum automatischen Leiten des empfangenen Stroms am Eingang zu der einen oder den mehreren zusätzlichen Wärmetauschvorrichtungen (4A, 4B), wenn das Wärmeträgerfluid eine Temperatur hat, die niedriger als der Referenzwert ist, wobei der Heizkörper im Kühlbetrieb arbeitet.

10. Heizkörper nach Anspruch 8 oder 9, **dadurch gekennzeichnet, dass** er eine elektronische Steuereinheit bereitstellt, wobei die Öffnung des ersten Auslasses oder des zweiten Auslasses (44) durch die elektronische Steuereinheit wählbar ist, vorzugsweise mit einer Anzeige und Betätigung und/oder Auswahl von Tasten.

## Revendications

1. Radiateur comprenant un ou plusieurs éléments chauffants verticaux (1), en mesure de recevoir un écoulement de fluide caloporteur provenant d'un raccord d'entrée de radiateur (50), comprenant au moins une paroi profilée (7) couplée à une surface arrière desdits un ou plusieurs éléments chauffants verticaux (1), ladite au moins une paroi profilée (7) ayant un profil transversal définissant au moins un canal laminaire (703) délimité par ladite au moins une paroi profilée (7) et par au moins une partie desdits un ou plusieurs éléments chauffants verticaux (1) et ayant une bouche inférieure et une bouche supérieure, grâce à quoi, lorsqu'un fluide caloporteur ayant une température supérieure à une température ambiante s'écoule dans lesdits un ou plusieurs éléments chauffants verticaux (1), l'air ambiant suit un mouvement de convection en entrant dans ladite bouche inférieure et en sortant de ladite bouche supérieure dudit au moins un canal laminaire (703) et en absorbant la chaleur du fluide caloporteur s'écoulant dans lesdits un ou plusieurs éléments chauffants verticaux (1), ledit radiateur étant **caractérisé en ce qu'**il comprend en outre un ou plusieurs dispositifs d'échange thermique supplémentaires (4A, 4B), montés sur une surface arrière de ladite au moins une paroi profilée (7), reliés de manière hydraulique en aval desdits un ou plusieurs éléments chauffants verticaux (1) par l'intermédiaire d'au moins une conduite de raccordement (41).

2. Radiateur selon la revendication 1, **caractérisé en ce que** ledit au moins un canal laminaire (703) présente une profondeur comprise entre 0,8 cm et 2 cm, de préférence comprise entre 0,9 cm et 1,5 cm, de façon davantage préférée égale à 1 cm.

3. Radiateur selon la revendication 1 ou 2, **caractérisé en ce que** ledit profil transversal de ladite au moins une paroi profilée (7) est un profil transversal en forme d'oméga, comprenant une partie plane centrale (700) reliée à deux parties planes latérales (701), parallèles à la partie plane centrale (700), par l'intermédiaire de parties planes intermédiaires respectives (702).

4. Radiateur selon l'une quelconque des revendications précédentes, **caractérisé en ce que** les dispositifs d'échange thermique supplémentaires (4A, 4B) sont au moins deux dispositifs reliés de manière hydraulique l'un à l'autre/les uns aux autres.

5. Radiateur selon l'une quelconque des revendications précédentes, **caractérisé en ce que** chacun desdits un ou plusieurs dispositifs d'échange thermique supplémentaires (4A, 4B) comprend un échangeur thermique à ailettes (420A, 420B), en mesure de recevoir un écoulement d'un fluide caloporteur provenant desdits un ou plusieurs éléments chauffants verticaux (1), lequel est logé dans un logement doté d'au moins une ouverture inférieure (425A, 425B), de préférence une ouverture inférieure centrale, et d'une ou de plusieurs ouvertures supérieures (426AR-426AL, 426BR-426BL), de préférence une paire d'ouvertures supérieures, de façon davantage préférée une paire d'ouvertures supérieures latérales, grâce à quoi, lorsqu'un fluide caloporteur ayant une température supérieure à une température ambiante s'écoule dans l'échangeur thermique à ailettes (420A, 420B), l'air ambiant suit un chemin de convection en entrant dans ladite au moins une ouverture inférieure (425A, 425B) et en sortant desdites une ou plusieurs ouvertures supérieures (426AR-426AL, 426BR-426BL) en absorbant la chaleur du fluide caloporteur s'écoulant dans l'échangeur thermique à ailettes (420A, 420B).

6. Radiateur selon la revendication 5, **caractérisé en ce que** ledit logement est défini par une surface arrière de ladite au moins une paroi profilée (7), par deux flancs latéraux de radiateur (8R, 8L) couplés auxdits un ou plusieurs éléments chauffants verticaux (1) et dotés de ladite au moins une paire d'ouvertures supérieures latérales (426AR-426AL, 426BR-426BL), et par un couvercle profilé (424A, 424B) doté de ladite au moins une ouverture inférieure (425A, 425B).

7. Radiateur selon la revendication 5 ou 6, **caractérisé en ce que** chacun desdits un ou plusieurs dispositifs d'échange thermique supplémentaires (4A, 4B) comprend un ventilateur électrique (421A, 421B) monté dans ledit logement en correspondance avec ladite au moins une ouverture inférieure (425A, 425B), de préférence actionné via une unité de commande électronique, de façon davantage préférée comprenant un dispositif d'affichage et des boutons d'actionnement et/ou de sélection.

8. Radiateur selon l'une quelconque des revendications précédentes, **caractérisé en ce qu'**il comprend en outre un moyen d'actionneur trois voies (6), comprenant une entrée reliée au raccord d'entrée de radiateur (50), une première sortie reliée auxdits un ou plusieurs éléments chauffants verticaux (1), et une deuxième sortie (44) reliée à ladite au moins une conduite de raccordement (41), grâce à quoi la deuxième sortie (44) dudit moyen d'actionneur (6) est reliée en aval desdits un ou plusieurs éléments chauffants verticaux (1) et en amont desdits un ou plusieurs dispositifs d'échange thermique supplémentaires (4A, 4B), la deuxième sortie (44) étant fermée lorsque ladite première sortie est ouverte, grâce à quoi le raccord d'entrée de radiateur (50) est relié auxdits un ou plusieurs éléments chauffants verticaux (1), et ladite première sortie étant fermée lorsque la deuxième sortie (44) est ouverte, grâce à quoi le raccord d'entrée de radiateur (50) est relié auxdits un ou plusieurs dispositifs d'échange thermique supplémentaires (4A, 4B).

9. Radiateur selon la revendication 8, **caractérisé en ce que** ledit moyen d'actionneur trois voies comprend un moyen d'actionneur thermostatique trois voies (6), ladite entrée dudit moyen d'actionneur thermostatique trois voies (6) étant en mesure de recevoir un écoulement d'un fluide caloporteur provenant du raccord d'entrée de radiateur (50), ledit moyen d'actionneur thermostatique trois voies (6) étant en mesure d'ouvrir ladite première sortie afin d'orienter automatiquement l'écoulement reçu à l'entrée vers lesdits un ou plusieurs éléments chauffants verticaux (1), lorsque ledit fluide caloporteur a une température supérieure à une valeur de référence, de préférence réglable, grâce à quoi le radiateur fonctionne en mode chauffage, et d'ouvrir la deuxième sortie (44) afin d'orienter automatiquement l'écoulement reçu à l'entrée vers lesdits un ou plusieurs dispositifs d'échange thermique supplémentaires (4A, 4B), lorsque ledit fluide caloporteur a une température inférieure à ladite valeur de référence, grâce à quoi le radiateur fonctionne en mode refroidissement.

10. Radiateur selon la revendication 8 ou 9, **caractérisé en ce qu'**il intègre une unité de commande électronique, l'ouverture de ladite première sortie ou de ladite deuxième sortie (44) peut être sélectionnée par le biais de l'unité de commande électronique, comprenant de préférence un dispositif d'affichage et des boutons d'actionnement et/ou de sélection.
